# EUROPEAN PATENT APPLICATION

(11) **EP 3 761 248 A1**
(43) Date of publication of application: **06.01.2021**
(21) Application number: 19184252.5
(22) Date of filing: 03.07.2019
(51) Int. Cl.: G06Q 20/34, G06Q 20/32, G07F 7/08, G07F 7/10, G07F 7/12

(54) **TRANSACTION DEVICE MANAGEMENT**

(71) Applicant: Mastercard International Incorporated, New York, NY 10577 (US)
(72) Inventor: NOE, James Christian, West Wickham, Cheshire BR4 0BL (GB); TIERNEY, John, Merseyside, Cheshire CH60 7TF (GB)
(74) Representative: Lawrence, Richard Anthony

(57) **Abstract**

There is provided a computer-implemented method for management of a transaction device (8) with a contactless interface, the method being performed by a mobile device (4). The method comprises accessing (112) a mobile service application (704) installed on the mobile device (4), authenticating (114) a user at the mobile device (4), establishing (116) a management operation associated with the transaction device (8). The method further comprises the mobile device (4) requesting a response from the transaction device (8) associated with the management operation via the contactless interface, the transaction device (8) generating the response and providing it to the mobile device (4); and the mobile service application (704) using the response to effect the management operation. There is also provided a suitably configured mobile device (4) and transaction device (8) for performance of the above-described methods.

## Description

### TECHNICAL FIELD

The present disclosure relates to transaction device management. In embodiments, it relates to management of a contactless transaction device over its contactless interface.

### BACKGROUND

Contactless devices such as smart cards are widely adopted for use as transaction devices in a number of different contexts. One exemplary use is as a travel ticket or access card. Management of contactless smart cards, e.g. to apply changes to the smart card, normally involves the user seeking application of a change from the service provider. For example, some transport providers enable paper season tickets to be replaced by contactless smart cards for reusable and paperless travel. However, in order to load tickets onto the contactless smart card, the user must purchase the ticket from the service provider at a suitable location - namely, at a ticket vending machine, ticket office, or via the service provider's website. The ticket must then be loaded onto the smart card at a suitable loading station. A significant limitation of current approaches to applying changes to contactless smart cards is that the service provider is required to have suitable infrastructure, in the above example a suitable loading station, in place to enable changes to be applied to the smart card. Another is that the user needs to be able to access this infrastructure.

A further example of a contactless smart card to which changes are frequently applied is a payment card issued by an issuing bank. Currently, two types of electronic payment transactions are commonplace in the payments industry when using payment cards such as debit/credit/prepaid cards: magnetic-stripe transactions and chip-based transactions according to EMV (global standard for credit and debit payment cards based on chip card technology) protocols as standardised by the payment industry body EMVCo. Magnetic-stripe transactions and EMV transactions can be split into two categories: contact transactions and contactless transactions. Contact transactions require that the card be in contact with the terminal for the transaction to occur. For example, magnetic-stripe transactions entail using a card that stores data on a band of magnetic material - the magnetic stripe. The payment card is swiped into a terminal to perform a magnetic-stripe transaction. In contrast, contactless transactions use near field communication (NFC) technology to provide payment credentials from the card to a merchant device such as a point-of-sale (POS) terminal or another computing device, for example a mobile phone or a tablet computer. To carry out a contactless transaction, the payment card is held against the merchant device by the cardholder when prompted to do so.

Typically, issuing banks enable users to manage payment cards via an automated teller machine (ATM). For example, if the user were to require the PIN of the payment card to be changed, this would normally involve the user inserting their payment card into the ATM and using the screen of the ATM to follow a PIN change procedure. In a typical set up, the ATM is in communication with a host processor, which is in turn in communication with a bank processor, whereby the communication is provided by an ATM network. While the card is held within the ATM, issuer scripts are normally sent to the payment card using the contact interface of the card, where the scripts are often used to perform card-based administrative actions such as PIN change and PIN reset. Other kinds of maintenance to card parameters (such as the resetting of risk management counters after a successful online authorisation) can be performed in a similar way in an EMV contact POS terminal; however, it is typically not possible to change or reset PINs in this way.

A significant limitation of the above approach to management of payment cards is that some issuing banks that do not have their own ATM network or that do not have access to an ATM network are unable to provide effective administrative functionality. As a consequence, issuers often have difficulty in managing, for example, cardholder PINs.

Limits are often imposed on contactless transaction devices such as payment cards to protect against the misuse of lost and/or stolen cards. The limit may be, for example, 5 consecutive or €150 cumulative low-value contactless transactions without consumer authentication (typically without the consumer entering a PIN at the POS terminal). Once the limit is reached, the consumer is required to authenticate themselves by inserting the payment card into a POS terminal and entering their PIN before any further contactless transactions are allowed to take place. However, in the event that the consumer is not using a payment card, the existing process may not be possible. For example, alternative payment devices such as key fobs, stickers, rings and watches cannot be inserted into a POS terminal in order to perform a chip-and-PIN transaction. The problem is further exacerbated when the alternative payment device has no data connection with which the issuer can perform routine updates via a communications network.

The present disclosure has been devised to mitigate or overcome at least some of the above-mentioned problems.

### SUMMARY OF THE DISCLOSURE

According to a first aspect of the present disclosure there is provided a computer-implemented method for management of a transaction device with a contactless interface using a mobile device. The method comprises: accessing a mobile service application installed on the mobile device; authenticating a user at the mobile device; establishing a management operation associated with the transaction device; the mobile device requesting a response from the transaction device associated with the management operation via the contactless interface; the transaction device generating the response and providing it to the mobile device; and the mobile service application using the response to effect the management operation.

Authentication of a user of the mobile device or transaction device may be required. This may take place after the step of accessing the mobile service application, or may comprise authenticating the mobile device with the service provider before accessing the mobile service application installed on the mobile device.

In embodiments, a local wireless connection between the transaction device and the mobile device is established. The computer-implemented method may further comprise requesting additional authentication from the user before such a local wireless communication between the transaction device and the mobile device is established. This local wireless communication may be by a short range wireless technology, such as NFC.

Preferably, the authenticating step may comply with strong customer authentication requirements.

In embodiments, generating the response may comprise generating a cryptogram.

The management operation may be originated by a service provider remote from the mobile device and may require a response to the service provider to indicate that an authenticated user has possession of the mobile device and the transaction device. This may be necessary, for example, to establish that there is basis for a counter reset for the transaction device - this may be used to implement lost and stolen protection, for example to help support compliance with the Regulatory Technical Standards for the new Payment Services Directive (The PSD2 RTS: https://eur-lex.europa.eu/legal-content/EN/TXT/PDF/?uri=CELEX:32018R0389&from=EN) on strong customer authentication (SCA). This may be used to establish that the consumer is still in possession of the transaction device, and/or change user credentials on the user device.

As an alternative, the management operation may be initiated by an authenticated user using the mobile service application to obtain permission from a service provider to update data in the transaction device. The data in the transaction device may comprise one or more of the following: PIN change; PIN reset; name change; address change, counter reset, risk management parameter change, load ticket, delete ticket, update ticket.

In either case, the management operation may comprise resetting counters or accumulators associated with the transaction device.

Resetting of counters or accumulators may be external to the mobile device and transaction device. Alternatively, resetting of counters or accumulators may be carried out at the transaction device.

In some embodiments, the service provider may provide the mobile device with a script to be performed by the transaction device for resetting or updating at the transaction device. The mobile device may determine that the transaction device is the transaction device that provided the response, and if so, send the script to the transaction device, whereupon the transaction device executes the script.

In embodiments, the management operation may result in a change remote to the transaction device - for example, elsewhere in a transaction system in relation to a user account associated with the transaction device - but in other embodiments, there is a further step of the mobile device communicating with the transaction device to effect a change in information held in the transaction device. This may be a change in user credentials, or a change in other information relating to use of the transaction device, such as a counter reset.

The computer-implemented method may further comprise the mobile device acting to effect the change to information held in the transaction device by: receiving, from the service provider, a set of instructions comprising details of the change to user credentials; and transmitting the set of instructions from the mobile device to the transaction device via the established local wireless communication, for the transaction device to apply the change to information held in the transaction device in accordance with the set of instructions. The step of transmitting the set of instructions from the mobile device to the transaction device may be carried out over a secure channel.

The step of establishing a local wireless communication between the transaction device and the mobile device may comprise presenting the transaction device at the mobile device for a first time, and transmitting the set of instructions from the mobile device to the transaction device may comprise presenting the transaction device at the mobile device for a second time. In the context of a "tap and go" contactless transaction, there may be a "first tap" to establish the management operation, and a "second tap" to effect the change at the transaction device. In this arrangement, the mobile device may be configured to verify that the transaction device is the same as the one presented the first time. An alternative possibility is for the mobile device and the transaction device to be kept in communication (in the case of NFC, in physical proximity) throughout both actions.

The set of instructions may comprise a script for execution at the transaction device.

The transaction device may operate according to EMV protocols. The transaction device may be a payment device for carrying out an EMV transaction and the mobile service application may be a mobile payment application. In such cases, the confirmation message may comprise an EMV Application Cryptogram (AC), and the service provider may be an issuer of the transaction device, or another party (such as the transaction processing system) acting with authority delegated by the issuer. The AC can be verified by the issuer host system (or a processor or service provider acting on its behalf) in order to provide confidence that the mobile device is communicating with the correct transaction device. The set of instructions may then be an issuer script issued by or on behalf of the issuer of the transaction device.

The computer-implemented method may further comprise the transaction device receiving from the service provider via the mobile device a set of instructions comprising details of the change to user credentials; and applying the change to information held in the transaction device in accordance with the set of instructions. The step of receiving the set of instructions from the mobile device to the transaction device may be carried out over a secure channel.

Establishing a local wireless communication between the transaction device and the mobile device may comprise presenting the transaction device at the mobile device for a first time, and transmitting the set of instructions from the mobile device to the transaction device may comprise presenting the transaction device at the mobile device for a second time. In the context of a "tap and go" contactless transaction, there may be a "first tap" to establish the management operation, and a "second tap" to effect the change at the transaction device. In this arrangement, the mobile device may be configured to verify that the transaction device is the same as the one presented the first time. An alternative possibility is for the mobile device and the transaction device to be kept in communication (in the case of NFC, in physical proximity) throughout both actions.

The set of instructions may comprise a script for execution at the transaction device.

The transaction device may operate according to EMV protocols. The transaction device may be a payment device for carrying out an EMV transaction and the mobile service application may be a mobile payment application. In such cases, the confirmation message may comprise an EMV AC, and the service provider may be an issuer of the transaction device, or another party (such as the transaction processing system) acting with authority delegated by the issuer. The AC can be verified by the issuer host system (or a processor or service provider acting on its behalf) in order to provide confidence that the mobile device is communicating with the correct transaction device. The set of instructions may then be an issuer script issued by or on behalf of the issuer of the transaction device.

The transaction device may be a payment device, such as a payment device for carrying out an EMV or transit transaction. The mobile service application may be a mobile payment application. Other use cases other than general purpose payment are possible - for example, the transaction device may be used for user ticketing on a transit network.

The transaction device may be an active device comprising a power supply and a means of data communication. The data communication may be performed from the device itself (for example, a smart watch with a Wi-Fi or cellular data connection). Alternatively, the data connection may be established by the active device working through a companion device, where the data connection is performed by the companion device (for example, a smart watch paired via Bluetooth to a smart phone where the smart phone provides a Wi-Fi or cellular data connection). Examples of active devices include, but are not limited to, smart phones or smart watches that have a wallet application offering contactless and in-app payments.

The transaction device may be a passive device. A passive device is one that has no means of obtaining a data connection, and typically does not have a power supply. Examples of passive devices include, but are not limited to, a payment card, a smart card (e.g. for use in transit applications), or non-card form factors such as a smart ring, key fob, sticker, bracelet, cufflink, or smart watch strap. Such non-card form factors often comprise wearable devices and are, therefore, often called passive wearables'.

Aspects of the disclosure have particular utility for passive transaction devices, particularly where these have only a contactless interface, particularly a contactless interface adapted only for close range interaction (such as NFC). Such transaction devices are extremely convenient for users and relatively secure because of the limited interaction model, but this limitation in interaction also renders management of such devices difficult, and may cause challenges with PSD2 regulation.

In a second aspect, the disclosure provides a mobile device adapted for management of a transaction device with a contactless interface, the mobile device comprising at least one processor, at least one memory, and communication capability including a contactless interface, wherein the mobile device is adapted to perform the method described above in respect of the first aspect.

The mobile device may have a mobile service application installed thereon, and the mobile service application may be adapted to carry out one or more steps of the method described above in respect of the first aspect.

In a third aspect, the disclosure provides a computer program product for management of a transaction device with a contactless interface using a mobile device, the computer program product being arranged to establish wireless communication means for local communication between the mobile device and the transaction device and communication with a service provider, the computer program product comprising instructions, when the program is executed by a computer, cause the computer to perform the method described above in respect of the first aspect.

In a fourth aspect, the disclosure provides a computer-readable storage medium for management of a transaction device with a contactless interface using a mobile device, the computer-readable storage medium being arranged to establish wireless communication means for local communication between the mobile device and the transaction device and communication with a service provider, the computer-readable storage medium comprising instructions, when the program is executed by a computer, cause the computer to perform the method described above in respect of the first aspect.

In a fifth aspect, the disclosure provides a transaction device adapted for performance of a management operation, wherein the transaction device comprises a processor, a memory and a capability for contactless communication with a contactless interface, , wherein the transaction device is adapted to perform the method described above in respect of the first aspect.

The transaction device may be a payment device, such as a payment device for carrying out an EMV or transit transaction. The mobile service application may be a mobile payment application. Other use cases other than general purpose payment are possible - for example, the transaction device may be used for user ticketing on a transit network.

The transaction device may be an active device comprising a power supply and a means of data communication. The data communication may be performed from the device itself (for example, a smart watch with a Wi-Fi or cellular data connection). Alternatively, the data connection may be established by the active device working through a companion device, where the data connection is performed by the companion device (for example, a smart watch paired via Bluetooth to a smart phone where the smart phone provides a Wi-Fi or cellular data connection). Examples of active devices include, but are not limited to, smart phones or smart watches that have a wallet application offering contactless and in-app payments.

The transaction device may be a passive device. A passive device is one that has no means of obtaining a data connection, and typically does not have a power supply. Examples of passive devices include, but are not limited to, a payment card, a smart card (e.g. for use in transit applications), or non-card form factors such as a smart ring, key fob, sticker, bracelet, cufflink, or smart watch strap. Such non-card form factors often comprise wearable devices and are, therefore, often called passive wearables'.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
Figure 1 is a schematic diagram showing a typical four-party model used in payment interactions between entities operating in a card scheme;
Figure 2 is a flowchart showing methods for management of a transaction device with a contactless interface, in accordance with an embodiment;
Figure 3 is a schematic diagram showing the connectivity between an issuer, a mobile device and a contactless payment card, in accordance with an embodiment;
Figure 4 is a schematic diagram showing the connectivity between an issuer, a mobile device and a contactless-only passive wearable device, in accordance with an embodiment;
Figure 5 is a schematic diagram showing the computing architecture of the mobile device shown in Figures 3 and 4, in accordance with an embodiment;
Figure 6 is a flowchart showing how strong customer authentication (SCA) may be performed for resetting counters at a contactless wearable device, in accordance with an embodiment;
Figure 7 is a schematic diagram showing a user accessing a mobile application on a mobile device for performing SCA for resetting counters at a contactless wearable device, in accordance with an embodiment;
Figure 8 is a schematic diagram showing generation and transmission of a counter reset script used for resetting counters at the contactless wearable device, in accordance with an embodiment; and
Figure 9 is a flowchart showing how changes to user credentials may be applied to a contactless smart card using a mobile device, in accordance with an embodiment;
Figure 10 is a schematic diagram showing a user accessing a mobile payment application on a mobile device for management of a contactless payment card, in accordance with an embodiment;
Figure 11 is a schematic diagram showing generation of a script used for applying a change to user credentials on the contactless payment card, in accordance with an embodiment; and
Figure 12 is a schematic diagram showing transmission of the script to the contactless payment card, in accordance with an embodiment.

### DETAILED DESCRIPTION

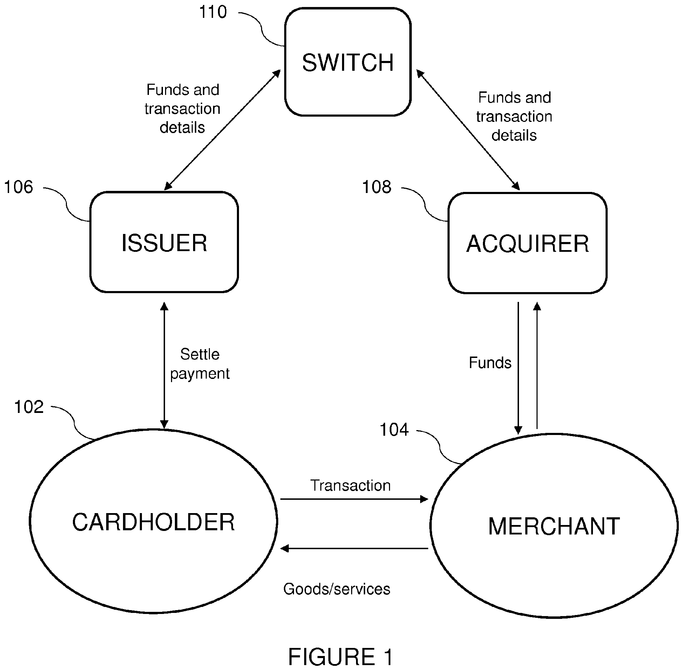

General and specific embodiments of the disclosure will be described below with reference to Figures 1 to 12.

### FOUR-PARTY TRANSACTION MODEL

A typical four-party model used in payment interactions between entities operating in a card scheme is shown in Figure 1.

Normally, card schemes - payment networks linked to payment cards - are based on one of two models: a three-party model or a four-party model (adopted by Mastercard and others). For the purposes of this document, the four-party model is described in further detail below.

The four-party model may be used as a basis for the transaction network. For each transaction, the model comprises four entity types: cardholder 102, merchant 104, issuer 106 and acquirer 108. In this model, the cardholder 102 purchases goods or services from the merchant 104. The issuer 106 is the bank or any other financial institution that issued the card to the cardholder 102. The acquirer 108 provides services for card processing to the merchant 104.

The model also comprises a central switch 110 - interactions between the issuer 106 and the acquirer 108 are routed via the switch 110. The switch 110 enables a merchant 104 associated with one particular bank (acquirer 108) to accept payment transactions from a cardholder 102 associated with a different bank (issuer 106).

A typical transaction between the entities in the four-party model can be divided into three main stages: authorisation, clearing and settlement. The cardholder 102 initiates a purchase of goods or services from the merchant 104 using their card. Details of the card and the transaction are sent to the issuer 106 via the acquirer 108 and the switch 110 to authorise the transaction. Should the transaction be considered abnormal by the issuer 106, the cardholder 102 may be required to undergo a verification process to verify their identity and the details of the transaction. Once the verification process is complete the transaction is authorised.

On completion of the transaction between the cardholder 102 and the merchant 104, the transaction details are submitted by the merchant 104 to the acquirer 108 for clearing and settlement. Clearing is the process by which merchants 104 and their acquirers 108 submit the definitive list of transactions performed. Settlement is the final transfer of funds between parties. Clearing and settlement processes are typically determined by the network 110.

Separately, the issuer 106 and the cardholder 102 settle the payment amount between them. A service fee is paid to the acquirer 108 by the merchant 104 for each transaction, and an interchange fee is paid to the issuer 106 by the acquirer 108 in return for the settlement of funds.

In summary, for a typical transaction, the four-party model comprises four entity types: cardholder 102, merchant 104, issuer 106 and acquirer 108. In this model, the cardholder 102 purchases goods or services from the merchant 104. The issuer 106 is the bank or any other financial institution that issued the card to the cardholder 102. The acquirer 108 provides services for card processing to the merchant 104. In certain transaction types, other arrangements are possible - for example, transactions are possible where the issuer 106 and the acquirer 108 are the same entity, in which case no routing of the transaction between the two is required. Furthermore, it is possible to have a four-party model that works using only a single message (where the authorisation, clearing and settlement can all happen at the same time). It should be understood that the four-party model is not limited to the use of payment cards as transaction devices. Other transaction devices, such as contactless non-card devices (e.g. rings, stickers, key fobs, watches or tags), can be used and will be discussed in further detail below.

### GENERAL METHOD FOR MANAGEMENT OF A CONTACTLESS TRANSACTION DEVICE

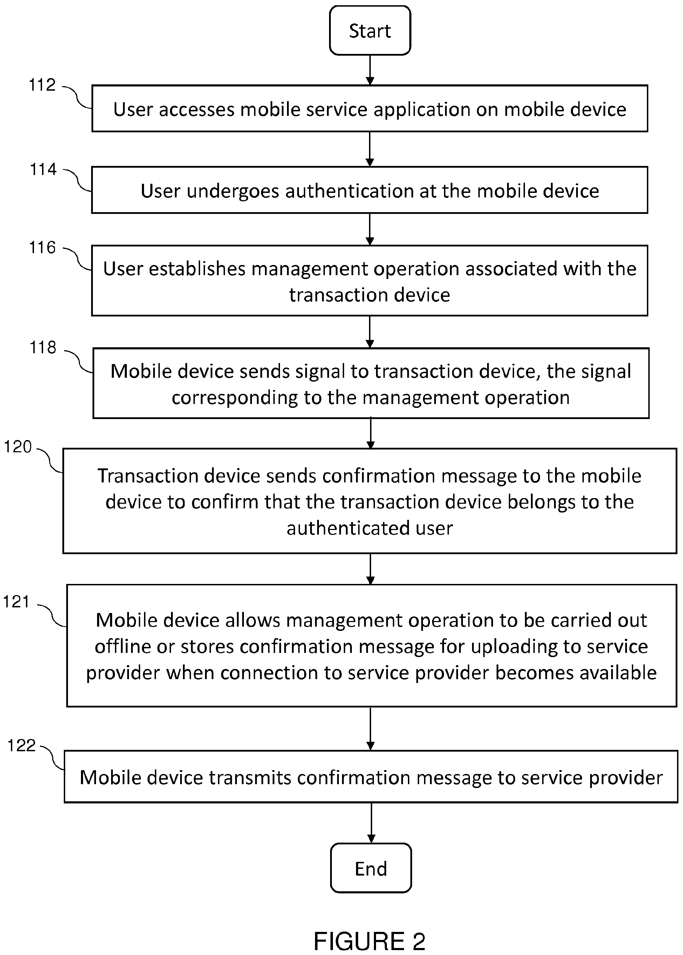

The present disclosure describes computer-implemented methods for management of a transaction device with a contactless interface. A set up including a transaction device, a mobile device and a service provider is suitable for implementing embodiments of the disclosure. Referring to Figure 2, the methods begin by, at Step 112, a user accessing a mobile service application on a mobile device. The user then undergoes authentication, at Step 114, at the mobile device. At Step 116, the user establishes a management operation associated with the transaction device. Next, at Step 118, the mobile device sends a signal to the transaction device, whereby the signal corresponds to the management operation. The signal is transmitted via a local wireless communication between the transaction device, via its contactless interface, and the mobile device. At Step 120, the transaction device sends a confirmation message to the mobile device to confirm that the transaction device belongs to the authenticated user. Next, at Step 121, the mobile device either allows the management operation associated with the transaction device to be carried out offline, or stores the confirmation message for uploading to the service provider when a connection to the service provider becomes available. Lastly, at Step 122, the mobile device transmits a confirmation message to the service provider to enable management of the transaction device.

In some embodiments, the mobile device may be online with the service provider via, for example, a data connection or a Wi-Fi connection. For example, this allows for issuer scripts to be generated and applied. A typical method for issuer script generation and application comprises the following commands from the mobile device to the transaction device: (i) SELECT Application; (ii) GET PROCESSING OPTIONS; (iii) READ RECORD commands; (iv) GENERATE AC; (v) communication with host system to validate AC and generate script commands; (vi) apply script commands to transaction device. At Step 118, the mobile device sending a signal to the transaction device may further comprise the mobile device requesting an AC from the transaction device. At Step 120, the transaction device sending a confirmation message to the mobile device may further comprise the transaction device providing the AC. In an online transaction of the present embodiment, as part of Step 121 the mobile device forwards the AC to the issuer host with a request to validate the AC and provide script commands for the management operation that has been requested. The issuer host system may then reply with script commands to be sent to the transaction device.

In other embodiments, the mobile device may be offline and thus disconnected from the service provider. This option allows for offline PIN changes (if supported by the transaction device) or delayed messages to the service provider, for example, where the service provider is an issuer host system, e.g. delayed messages to reset PSD2 counters. At Step 118, the mobile device sending a signal to the transaction device may further comprise the mobile device requesting an AC from the transaction device. At Step 120, the transaction device sending a confirmation message to the mobile device may further comprise the transaction device providing the AC using Offline Data Authentication. In an offline transaction of the present embodiment, as part of Step 121 the mobile device confirms the correct transaction device and either allows offline updates of the transaction device or stores a message to be uploaded to the issuer host when a data connection is next available.

### EXAMPLES OF A TRANSACTION DEVICE: CARD DEVICES

Card or non-card devices can be used as the transaction device. An example of a card device is a conventional contactless-enabled payment card. In some embodiments, a contactless-only card device may be used as the transaction device, whereby contactless-only card devices can be defined as card devices which have a contactless interface, but not a contact interface, and thereby transact at Point-of-Sale (POS) terminals using the contactless interface. Typically, such contactless-only card devices transact at POS terminals using NFC technology, but may be able to transact in other ways, such as via QR codes. An exemplary application of a contactless-only card device is for contactless smart cards issued by transport providers for reusable and paperless travel. In some embodiments, a "dual-interface" smart card device that can perform EMV transactions over both contact and contactless interfaces may be used as the transaction device.

### EXAMPLES OF A TRANSACTION DEVICE: NON-CARD DEVICES

Examples of non-card devices that can be used as transaction devices include contactless-enabled devices for use as wearables, such as watches and rings, or for attachment to belongings such as stickers, key fobs and tags. In some embodiments, a contactless-only non-card device may be used as the transaction device, whereby contactless-only non-card devices can be defined as non-card devices which have a contactless interface, but not a contact interface, and thereby transact at POS terminals using the contactless interface. Typically, such contactless-only non-card devices transact at POS terminals using NFC technology, but may be able to transact in other ways, such as via QR codes.

### PASSIVE OR ACTIVE CARD AND NON-CARD DEVICES

Transaction devices may be split into two categories - active devices and passive devices.

An active device has two defining characteristics: (1) an active device comprises a power supply; and (2) an active device has a means of data communication. The data communication may be established from the device itself (for example, a smart phone with a Wi-Fi or cellular data connection, or a smart watch with a SIM card permitting cellular data connection). Alternatively, the data connection may be established by the active device working through a companion device, where the companion device performs the data connection (for example, a smart watch paired via Bluetooth to a smart phone whereby when the smart watch requires a data connection, it uses that of the smart phone). Data connections may be established via Wi-Fi, cellular telephony data connections (such as 3G, 4G or 5G and so on), Bluetooth or other similar technologies. An active device will frequently be able to communicate with a remote server over such a communications network when required. An advantage of using active devices is that an issuer, or other service provider, is able to communicate with and update the credentials stored within the active device. Examples of active devices include, but are not limited to, smart phones or smart watches that have a wallet application offering contactless and in-app payments.

A passive device is one that has no means of obtaining a data connection, and typically does not have a power supply. Unlike active devices, there is no way to easily update the credentials on a passive device after the device has been issued to the consumer. Examples of passive devices include, but are not limited to:
- a payment card adhering to the ISO 7810 ID-1 form factor standards, the ISO 14443 standards, and the EMV standards. Such a card may support contactless-only, contact-only, or contactless and contact transactions;
- a smart card adhering to the ISO 7810 ID-1 form factor standards, and a transit standard or specification such as ITSO, Mifare or Felica;
- a non-card form factor, such as a smart ring, key fob, sticker, bracelet, cufflink, or smart watch strap, which is able to adhere to a technology such as ISO 14443 and EMV standards in order to transact in a retail or transit location - these are often called passive wearables'.

Passive transaction devices lack the ability to connect to a mobile device via, for example, Bluetooth or Wi-Fi, and will require to be powered by contact or by inductive power provision as is normal for passive NFC devices. For such a passive transaction device, particularly if it is reliant on a contactless interface for communication, communication with an external server for management operations is hard to achieve and greatly complicates management of such devices.

### SET UP USING CONTACTLESS PAYMENT CARD AS TRANSACTION DEVICE

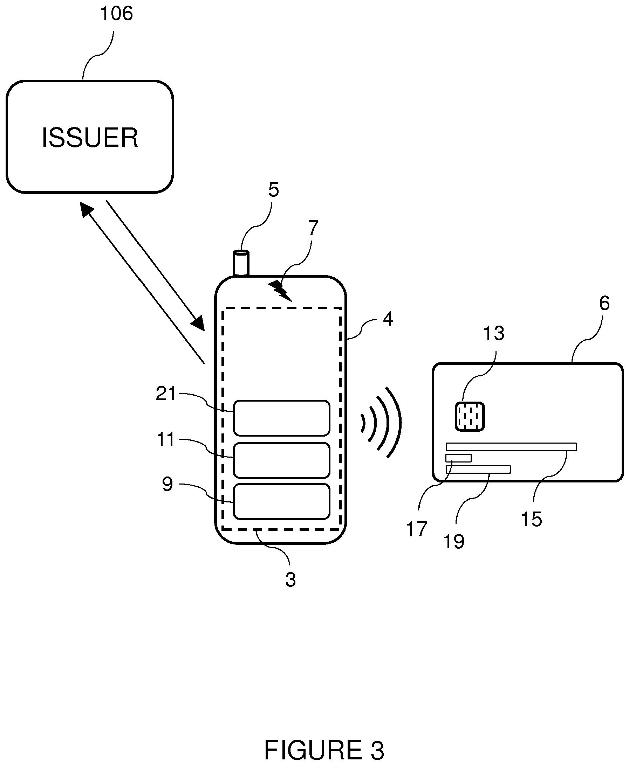

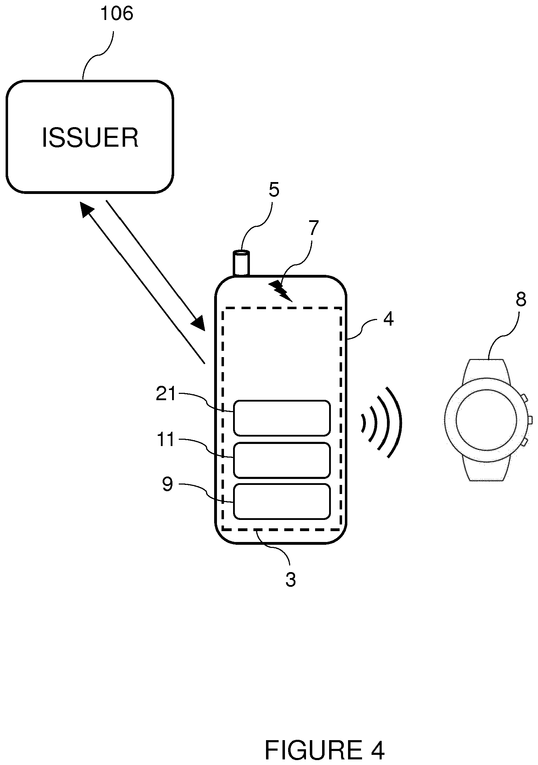

Exemplary hardware which is suitable for implementing embodiments of the disclosure will now be described with reference to Figures 3 and 4. The set up shown in Figure 3 shows the connectivity between an issuer 106 as an example of a service provider, a mobile computing device 4 belonging to a cardholder (who is not shown), and a contactless payment card 6, as an example of the transaction device, which has been issued by the issuer 106 to the cardholder, in accordance with an embodiment of the present disclosure.

Mobile computing devices comprising the elements shown in the mobile device 4 of Figure 3 are suitable for implementing embodiments of the disclosure. In the example shown, the mobile computing device 4 is a mobile cellular telecommunications handset ("mobile phone" or "mobile device") - in other embodiments, the mobile device 4 may be another type of computing device such as a tablet or laptop computer and the mobile computing device need not have cellular telecommunications capabilities (so long as some form of data connection, such as a Wi-Fi or Ethernet connection, is available).

The mobile device 4 has a display 3 providing, in this example, a touchscreen user interface. The mobile device 4 is equipped with a wireless telecommunications apparatus 5 for communication with a wireless telecommunications network and local wireless communication apparatus 7. The mobile device 4 further comprises a central processing unit 9 and memory 11. The mobile device 4 also has an NFC controller chip 21, which includes both an NFC transmitter and an NFC receiver, and thus which enables the mobile device 4 to act as both a device and a terminal.

Payment cards comprising the elements shown in the conventional contactless payment card of Figure 3 are suitable for implementing embodiments of the disclosure. The contactless payment card 6 comprises a chip 13, a primary account number 15, an expiration date 17, and a cardholder name 19, all of which are normally (but not always) visible on the front side of the payment card 6. The contactless payment card 6 also comprises an antenna (not shown) for securing a connection with a contactless reader in completing a contactless transaction. On the reverse side of the payment card 6, the payment card 6 further comprises a magnetic stripe (not shown) and a cardholder verification code (sometimes called a cardholder verification value) (not shown). There may be several cardholder verification codes or values: for example, one encoded into the magnetic stripe; a different one printed onto the signature panel of the card; yet another one in the chip data; and lastly a dynamic one used in contactless transactions.

In this example, the NFC controller chip 21 adheres to at least the ISO 14443 standards, and the relevant EMV or card scheme's payment or terminal application standards.

### SET UP USING CONTACTLESS NON-CARD DEVICE AS TRANSACTION DEVICE

The set up shown in Figure 4 shows the connectivity between an issuer 106 as an example of a service provider, a mobile computing device 4 belonging to a consumer (not shown), and a passive smart watch 8, as an example of the transaction device, which has been issued by the issuer 106 to the cardholder, in accordance with an embodiment of the present disclosure. The description above of the elements of the mobile computing device 4 with respect to Figure 3 applies for the present embodiment shown in Figure 4.

Contactless-enabled non-card devices, such as the smart watch shown in Figure 4, are suitable for implementing embodiments of the disclosure. The passive smart watch 8 is an example of a passive wearable transaction device since, in the present embodiment, the passive smart watch lacks the ability to connect to a mobile device via Bluetooth or Wi-Fi, and is therefore disabled from communicating with an external server via the mobile computing device 4.

### COMPUTING ARCHITECTURE OF MOBILE COMPUTING DEVICE

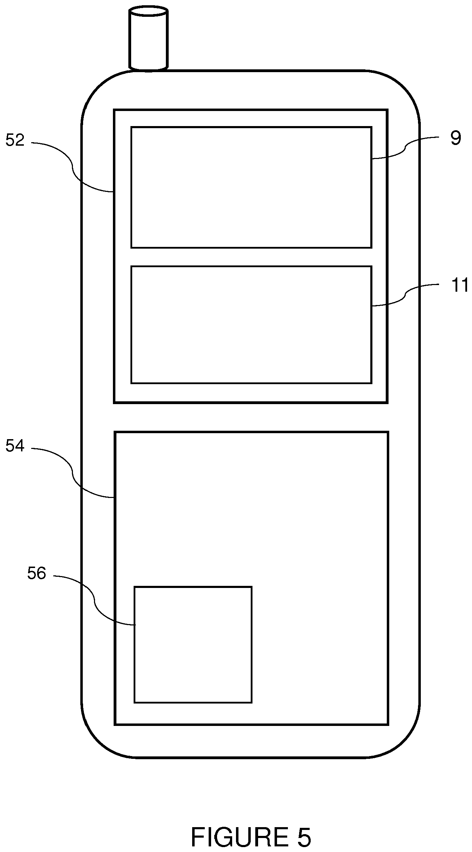

The computing architecture of the mobile computing device 4 of Figures 3 and 4 is shown in Figure 5. A main operating environment 52 of the mobile computing device 4 is shown along with a protected operating environment 54. The protected operating environment 54 may be a Subscriber Identity Module SIM, Universal Integrated Circuit Card UICC, a Secure Element or a hardware backed Trusted Execution Environment. Alternatively, there may be a sandbox or other logically protected environment in the main operating environment to provide a secure environment. This may involve using one or more external resources to provide a secure environment.

The main operating environment 52 comprises the central processing unit 9 and memory 11. The main operating environment 52 may be used with a generic operating system such as iOS or Android. The main operating environment 52 comprises the mobile service application (accessed by the user in Step 112 of Figure 2, as discussed above). The main operating environment 52 also comprises other applications normally needed by such a mobile computing device, such as a browser, a modem and a camera driver (not shown).

The protected operating environment 54 may comprise a payment application 56 for making in-app payments or payments at POS terminals. Alternatively, the elements relevant to the security of the payment application 56 may be comprised in the protected operating environment. In the present example, the payment application 56 is shown explicitly in the protected operating environment 54. The payment application may be located within the SIM or within another physically or logically protected environment. Alternatively, some parts of the payment application may be situated in the protected operating environment. Further, data from the application may be located in a protected memory.

### TYPICAL CONTACTLESS EMV TRANSACTION

Typically, for a contactless EMV transaction to take place using a payment application on a mobile computing device, the user is authenticated by a consumer device cardholder verification method. This cardholder verification may happen:
- on every transaction;
- on every transaction above a certain amount;
- on occasion when there have been multiple transactions without the mobile device being securely unlocked by the cardholder;
- after a pre-determined number of transactions;
- never (in which case reliance on PIN or signature at the POS terminal would be used);
- all transactions except certain transit transactions; or
- in accordance with other verification rules as defined by the wallet or issuer.

This provides the assurance that the legitimate consumer is performing the transaction. Such consumer device cardholder verification methods may include a personal identification number (PIN), a password, the drawing of a pattern on the lock screen of a phone, or biometric authentication mechanisms such as a fingerprint, voice recognition, face recognition, or an iris scan. Furthermore, it is possible to not use the device to authenticate the consumer, but rather to have the terminal prompt for an Online PIN.

Once the user has been authenticated, the user is able to initiate a payment transaction via the payment application. Alternatively, the payment may be initiated before authentication where an Online PIN is used. Contactless EMV transactions can use NFC technology to provide payment credentials from the contactless payment card to a merchant device such as a POS terminal. To carry out a contactless EMV transaction, the payment card or device can be held against the POS terminal by the cardholder when prompted to do so. Further detail regarding the initiation of a contactless EMV transaction can be found in the EMV Contactless Specifications for Payment Systems (in particular, 'Books A-D').

### SUPPORTING MANAGEMENT OF LOST & STOLEN PROTECTION FOR CARDS AND NON-CARD DEVICES

In Europe, the Regulatory Technical Standards for the new Payment Services Directive (The PSD2 RTS: https://eur-lex.europa.eu/legal-content/EN/TXT/PDF/?uri=CELEX:32018R0389&from=EN) on strong customer authentication (SCA) requires that contactless transactions that exceed a predefined limit, with respect to, for example, a number of consecutive transactions, are performed using SCA in order to protect against the misuse of lost and/or stolen cards. Low Value Transactions (LVTs), which can be defined as transactions below or equal to a value of that may be set by a card scheme or regulator on a regional or country basis (e.g. 50 Euros), may be performed without SCA. As part of the SCA requirements defined in the PSD2 RTS regulation, limits are imposed by the issuer on the number of LVTs that may take place without SCA. The limit may be either 5 consecutive contactless transactions without SCA, or a cumulative spend of 150 Euros without SCA. The correspondence between the transactions and the limit is tracked using an exemption counter or an exemption accumulator, whereby an exemption counter is for counting the number of transactions and an exemption accumulator is for calculating the cumulative spend by summing the values of the transactions. The term 'counter' may sometimes be used here and elsewhere to refer to either an exemption counter or an exemption accumulator - in other words, the term 'counter' may be used to encompass elements that ensure that a limit is not exceeded, whether this relates to a number of transactions limit or a cumulative spend limit. Once the exemption counter or the exemption accumulator reaches the limit predefined by the issuer, the issuer must ensure that the consumer authenticates themselves before allowing any more LVTs to take place without SCA. Embodiments of the present disclosure enable SCA requirements to be met by enabling exemption counters for transaction devices to be reset using the exemplary set up shown in Figure 3 or Figure 4.

### METHOD FOR MANAGEMENT OF A CONTACTLESS TRANSACTION DEVICE: RESETTING COUNTERS FOR A PASSIVE WEARABLE DEVICE

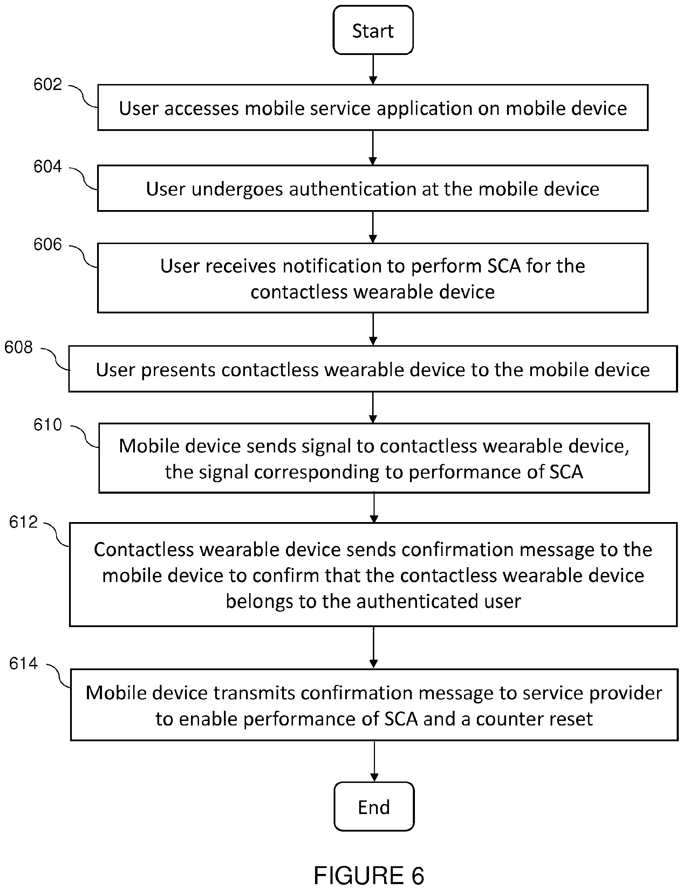

Computer-implemented methods for management of a passive wearable device as the transaction device will now be described with reference to Figures 6 to 8, in accordance with an embodiment of the present disclosure. The methods in this particular embodiment are used for resetting counters, e.g. an exemption counter, of the passive wearable device. It is to be understood that the methods may also be used for resetting accumulators, e.g. exemption accumulators of the passive wearable device. A set up, as shown in Figure 4, including a passive wearable device such as a smart watch 8, a mobile computing device 4 and an issuer 106 as an example of a service provider is suitable for implementing embodiments of the disclosure.

Referring to Figure 6, the methods begin by, at Step 602, a user accessing a mobile service application which is installed on the user's mobile device, whereby the mobile device is trusted by the issuer. At Step 604, the user undergoes authentication at the mobile device. The user is authenticated each time the mobile service application is accessed to provide assurance that the legitimate consumer is accessing the application. The user is authenticated by a consumer device verification method, such as a PIN, a password, the drawing of a pattern on the lock screen of a phone, or biometric authentication mechanisms such as a fingerprint, voice recognition, face recognition, or an iris scan. In some instances, the service provider may undertake additional security steps to ensure that the user accessing the mobile service application is the legitimate user of the contactless passive wearable device. The service provider may also check that the mobile device has previously been bound to the user of the contactless passive wearable device. For example, this may be done by taking a hash of some of the characteristics of the mobile device, installing a key into a secure area of the mobile device, or tracking geo-location of the mobile device. If the user authentication of Step 604 is not SCA-compliant, the authenticated user, at Step 606, then receives a notification via the user interface of the mobile device to perform SCA and enable a counter reset. Step 606 is an example of establishing a management operation associated with the contactless wearable device. In some implementations, Step 606 may not be required, and could be covered by the user authentication provided, at Step 604, upon login to the mobile service application. In some embodiments, even if the user authentication of Step 604 is SCA-compliant, Step 606 is carried out as an additional security mechanism.

Next, at Step 608, the user presents the contactless wearable device to the mobile device and a local wireless communication between the contactless wearable device and the mobile device is established via the contactless interface of the wearable device. At Step 610, the mobile device sends a signal to the contactless wearable device. The signal is transmitted via a local wireless communication between the contactless wearable device, via its contactless interface, and the mobile device. At Step 612, the contactless wearable device sends a confirmation message to the mobile device to confirm that the contactless wearable device belongs to the authenticated user. Lastly, at Step 614, the mobile device transmits a confirmation message to the service provider to provide evidence that SCA was performed by the consumer and allow a counter reset at the issuer host system.

It should be understood that the management operation of performing SCA and enabling a counter reset may be implemented for any transaction device, including passive or active, contactless-enabled or contactless-only card or non-card transaction devices.

### USE CASE FOR MANAGEMENT OF A CONTACTLESS TRANSACTION DEVICE: RESETTING COUNTERS FOR A PASSIVE WEARABLE DEVICE

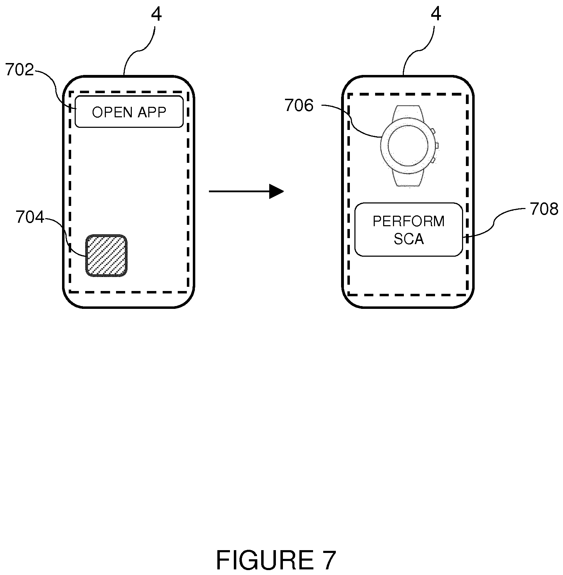

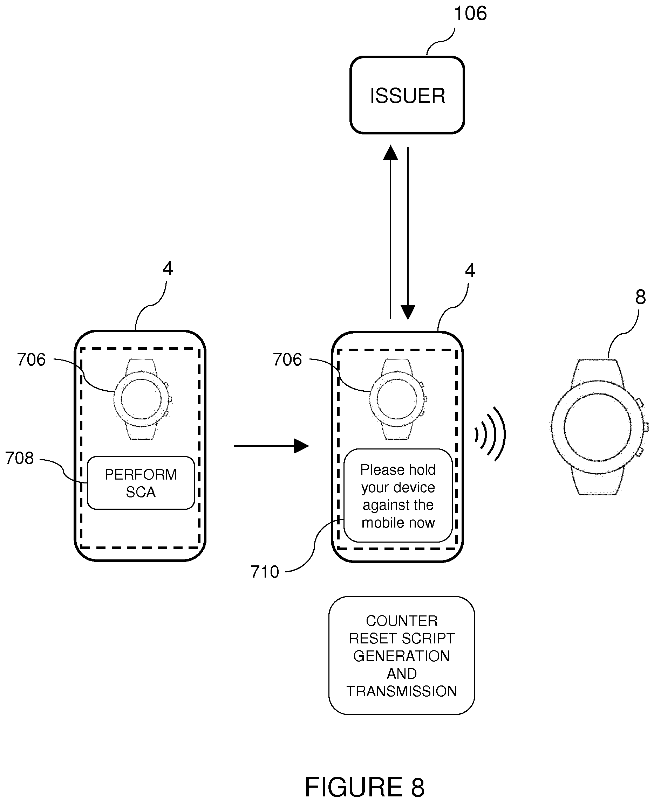

An exemplary embodiment of the disclosure which implements the methods described above with reference to Figure 6 will now be described with reference to Figures 7 and 8. In the present embodiment, a contactless-only passive wearable (a watch) is used as the transaction device. In this exemplary embodiment, a computer-implemented method is used to perform SCA and reset exemption counters on the contactless-only passive wearable device 8, using a mobile device 4. It is to be understood that the method may be used to reset exemption accumulators on the contactless-only passive wearable device.

Referring to Figure 7, when a user performs a transaction, the user may receive a push notification 702 on the user's mobile device 4, whereby the mobile device 4 is trusted by the issuer 106, wherein the push notification 702 comprises a prompt to the user to open a mobile payment application 704 which is installed on the user's mobile device 4. An example of when such a notification may be received could be when the issuer is allowing up to 5 LVTs on the device, and the consumer has just completed their 4^{th} LVT. In this instance, the notification serves to inform the cardholder that they only have one transaction left, and provides a mechanism to allow them to continue transacting.

The user accesses the mobile payment application 704 and confirms that SCA is to be performed to enable an exemption counter reset, via the "Perform SCA" button 708. Within the mobile payment application 704, the contactless-only passive wearable device 8 which is associated with the mobile payment application 704 and the user is shown as an image 706. In some implementations, the user may not receive a push notification 702 and instead SCA may be performed at login.

Referring to Figure 8, the user is then presented with a prompt message 710 to request that the contactless-only passive wearable device 8 is held against the mobile device 4 for resetting the exemption counter. While the contactless-only passive wearable device 8 is being held against the mobile device 4, a GENERATE AC command is generated, received by the mobile payment application 704, transmitted to the issuer 106, and validated by the issuer 106. Once the GENERATE AC command is successfully validated, a counter reset script is prepared by the issuer 106, transmitted securely to the mobile device 4 and to the mobile payment application 704, and finally, the counter reset script is delivered to the device 8 and executed. An alternative is that the mobile device 4 may support the secure transfer of an offline PIN to the contactless-only passive wearable device 8, which would allow exemption counters to be reset.

Using the mobile device 4 to perform an EMV transaction with the contactless-only passive wearable device 8 allows an appropriate script to be sent to the device 8 to reset any counters that support compliance with the PSD2-RTS, or use of an offline PIN to reset any counters on the device 8. Using the mobile device 4 to perform an EMV transaction with the contactless-only passive wearable device 8 also allows generation of a GENERATE AC command by the device 8 which can be verified by the issuer host system 106 which can then reset counters at the host system if the cryptogram is valid; this allows more contactless LVTs to be performed because the consumer has authenticated themselves via the mobile payment application 704 and provided evidence that they still have possession of the device 8 by means of the cryptogram it has generated.

In some embodiments, the device 8 may not have a data connection to the issuer host system 106, in which case the mobile payment application 704 can use Offline Data Authentication to gain confidence that the mobile device 4 is genuine; this allows the mobile device 4 to subsequently request the issuer host system 106 to reset the host system counters when a data connection becomes available.

When using the mobile device 4 to perform an EMV transaction with the contactless-only passive wearable device 8, the mobile device 4 is being used as a terminal to interact with the device 8 using a contactless EMV transaction including Offline Data Authentication - for example:

### SELECT PPSE

### SELECT

### GET PROCESSING OPTIONS

### A number of READ RECORD commands

GENERATE AC

The GENERATE AC command can provide both the Application Cryptogram and Offline Data Authentication.

In embodiments, the issuer 106 may monitor the consumer's behaviour. If the issuer 106 detects that the current offline limits on the consumer's transaction device are nearing depletion, the issuer 106 may send a message (such as an email, SMS or push notification) to the user's mobile device 4 in order to prompt the user to open the mobile payment application and update the contactless-only passive wearable device 8.

In embodiments, the exemption counters may be managed at the device system level or the host system level. For exemption counters managed at the device system level, an issuer script can be sent as above. For exemption counters managed at the host system level, the issuer 106 can ensure that the consumer has possession of the transaction device by requiring a tap to generate a cryptogram to be verified by the issuer host system. In this latter case, no additional script is required to be sent to the contactless-only passive non-card device 8, but the local communication between the mobile device 4 and the contactless-only passive non-card device 8 facilitates the consumer authentication in the presence of the contactless-only passive non-card device 8 which is having the counters reset. The exemption counters can therefore be reset at the host system level as a result of this authentication action. Typically, contactless-only non-card devices such as rings and stickers are configured as online-only devices and therefore the exemption counters are managed at the host system level.

This approach to management of counters held in the host system can be supported even when the mobile device does not have a data connection. In this case, the transaction device may be held against a mobile device which is offline. The mobile application could then validate using only Offline Data Authentication (ODA) as defined by EMVCo. ODA is a mechanism whereby an EMV device (for example, card or mobile) provides evidence to the POS terminal that it is a genuine device by providing certificate and signature information which the terminal can validate offline without the need for issuer processing. This would be sufficient to validate the token PAN against the value stored (securely) within the mobile application. Consequently, the validation could be carried out offline using the mobile application and passive contactless-only device. Whenever a data connection becomes available, the mobile application can send a message to the issuer host system to reset the exemption counters held at the host system level. In such a scenario, an additional layer of protection could optionally be added by the application monitoring the card/device's Application Transaction Counter (ATC), and ensure that it remains within a pre-defined threshold. Advantageously, the present embodiment provides enhanced security for passive wearable devices and may therefore be implemented by other issuers as well as other service providers.

### METHOD FOR MANAGEMENT OF A CONTACTLESS TRANSACTION DEVICE: APPLYING CHANGES TO USER CREDENTIALS FOR A SMART CARD DEVICE

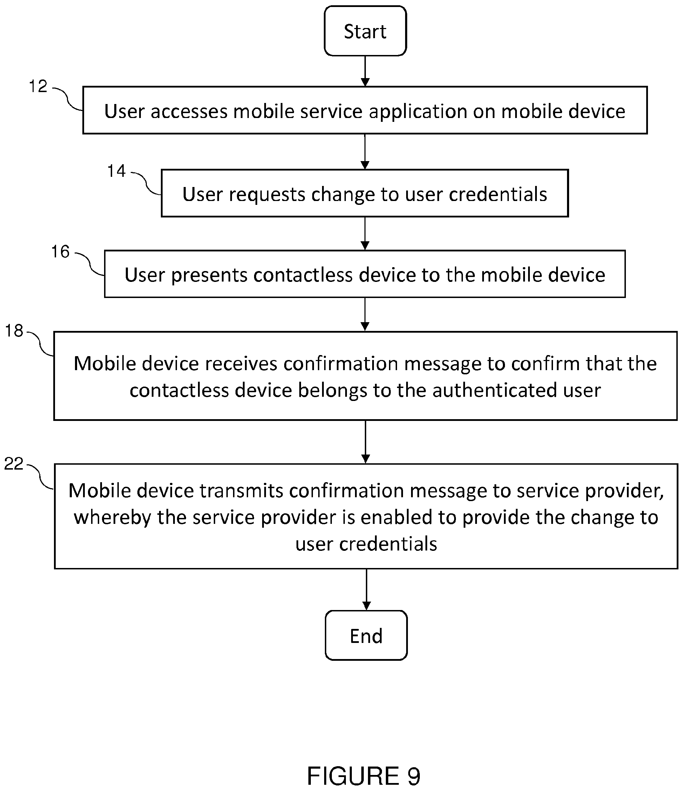

Computer-implemented methods for management of a smart card device as the transaction device, particularly for applying changes to user credentials of the smart card device, will now be described with reference to Figures 9 to 12, in accordance with an embodiment of the present disclosure. A set up, as shown in Figure 3, including a smart card such as a contactless payment card 6, a mobile computing device 4 and an issuer 106 as an example of a service provider is suitable for implementing embodiments of the disclosure. Management of a transaction device may include, for example, applying changes to user credentials on the smart card, it is to be understood that application of changes to user credentials on a smart card is provided as an example only, and that other forms of transaction device management are included within the scope of the present disclosure.

In the present embodiment, the method relates to the interaction between a service provider, a contactless smart card provided by the service provider, and a mobile device belonging to the holder of the contactless smart card.

It is to be understood that a smart card with a contactless interface is used in the present embodiment as a non-limiting example of a transaction device. In other embodiments, the transaction device may be a wearable device (e.g. a smart ring). The wearable device may be with or without a power supply and with or without a data connection. The transaction device may be an alternative smart device carrying payment or transit credentials.

First, in Step 12, a user accesses a mobile service application which is installed on the user's mobile device, whereby the mobile device is trusted by the service provider. The user is authenticated each time the mobile service application is accessed to provide assurance that the legitimate cardholder is accessing the application. The user is authenticated by a consumer device cardholder verification method, such as a PIN, a password, the drawing of a pattern on the lock screen of a phone, or biometric authentication mechanisms such as a fingerprint, voice recognition, face recognition, or an iris scan. In some instances, the service provider may undertake additional security steps to ensure that the user accessing the mobile service application is the legitimate user of the contactless smart card. The service provider may also check that the mobile device has previously been bound to the user of the contactless smart card. For example, this may be done by taking a hash of some of the characteristics of the mobile device, installing a key into a secure area of the mobile device, or tracking geo-location of the mobile device. In Step 14, the authenticated user then requests a change to user credentials. For example, this may be carried out via the user interface of the mobile device. Alternatively, the authenticated user may be prompted by the mobile application to input a change request. Step 14 is an example of establishing a management operation associated with the smart card or other transaction device. Another example of establishing a management operation comprises the mobile application receiving a notification from a service provider to provide confirmation that the smart card is in possession of the authenticated user. An embodiment using this approach is described in detail further below.

In Step 16, the user presents the contactless smart card to the mobile device and a local wireless communication between the contactless smart card and the mobile device is established via the contactless card interface.

In Step 18, the mobile device receives, from the contactless smart card, a confirmation message to confirm that the contactless smart card belongs to the authenticated user. In Step 22, the mobile device transmits the confirmation message to a service provider, whereby the service provider is enabled to provide the change to user credentials.

In some embodiments, the service provider may generate a set of instructions, such as a script, comprising details of the change. The script may be transmitted from the service provider to the mobile device via a secure channel. The user may present the contactless smart card to the mobile device again, and the mobile device may first check that it is transmitting to the same card, and then may transmit the script to the contactless smart card using NFC capability. Lastly, the mobile device may apply the requested change to the contactless smart card.

It should be noted that alternative approaches are possible in other embodiments of the disclosure to achieve the same functional result. For example, the steps of generating a script comprising details of the change, transmitting the script to the contactless smart card, and applying the requested change to the contactless smart card could be performed by the user continuously holding their card against the phone in which case the step of the user presenting the contactless smart card to the mobile device again would not be explicitly required.

While the discussion above relates to a smart card, use cases for the disclosure are not limited to this. Issuers may also wish to occasionally authenticate consumers who use passive contactless-only card or non-card form factors such as rings, stickers, key fobs, watches, or tags.

To protect against fraudulent use of lost or stolen devices (or to meet regulatory requirements, such as the Payment Services Directive 2, Regulatory Technical Specifications in the European Economic Area), the issuer can implement spending limits for transactions that do not provide authentication on the POS terminal (for example by Online PIN). The management of such limits can be performed either on the device or at the issuer's host system. For implementations that manage the limits at the device level, a way is needed to send a secure message to the device to reset the on-device counter or accumulator. For implementations that manage the limits at the host system level, the issuer will want the consumer to authenticate themselves whilst providing evidence that the non-card device is still in their possession. As will be described below, implementations of the disclosure may be used to manage such passive, non-card devices.

Some issuers do not have an easy means of updating card based PINs, for example, they may not have an ATM network. This embodiment allows these issuers to follow these steps in order to update or unblock a PIN on a transaction device. In such an example, the mobile device may go through some steps to capture and validate the existing PIN, capture a new PIN and validate a new PIN by requesting the cardholder to type it in twice. The new PIN would be sent, along with the cryptogram from the transaction device, to the issuer for validation, the issuer system would update their PIN on record, and if necessary, send an issuer script back to the mobile device to be transmitted to the transaction device to update any PIN stored upon it.

### USE CASE FOR MANAGEMENT OF A CONTACTLESS TRANSACTION DEVICE: APPLYING CHANGES TO USER CREDENTIALS FOR A SMART CARD DEVICE

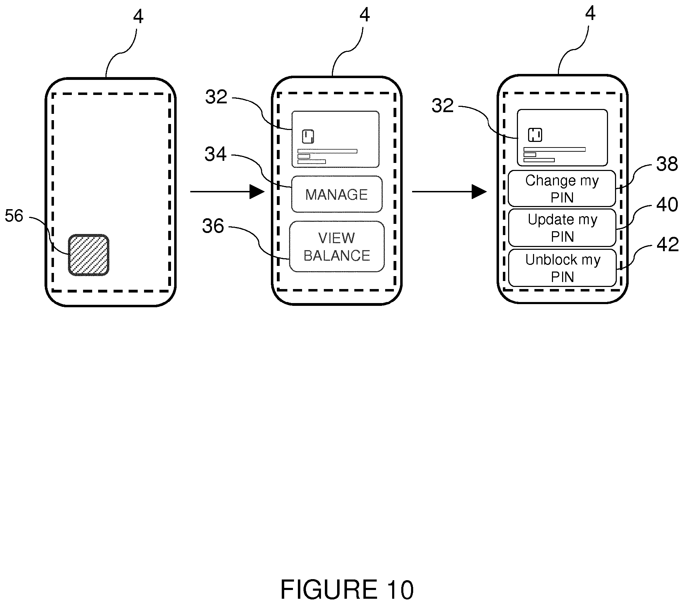

An exemplary embodiment of the disclosure which implements the methods described above with reference to Figure 9 will now be described with reference to Figures 10 to 12. In this exemplary embodiment, a computer-implemented method is used to apply changes to user credentials on a contactless payment card 6, using a mobile device 4. The method therefore relates to the interaction between issuer 106, a contactless payment card 6 provided by issuer 106, and a mobile device 4 belonging to the holder of the payment card 6 (see Figure 3).

In this embodiment, therefore, the contactless smart card is a contactless payment card 6, the service provider is an issuing bank or issuer 106, and the mobile service application is a mobile payment application 56. The user credentials to which changes may be applied may be, for example, PIN change or PIN reset. It should be noted, however, that the user credentials may apply to non-payment uses. In some embodiments, the change applied to user credentials may comprise any one or more of: PIN change; PIN reset; name change; address change; counter reset; risk management parameter change; load ticket; delete ticket; and update ticket.

Using this approach, the mobile payment application 56 is provided with an additional use - rather than simply enabling the mobile device 4 to act as a payment device, it enables the mobile device 4 to take the role normally adopted by a POS terminal in updating a contactless payment card 6. The trust relationship between the issuer and the mobile payment application 56 is used to enable all parties to have confidence that any such update is legitimately and effectively made.

Referring to Figure 10, the user accesses the mobile payment application 56 that is installed on the user's mobile device 4, whereby the mobile device 4 is trusted by the issuer 106. Within the mobile payment application 56, the contactless payment card that is associated with the mobile payment application 56 and the user is shown as an image 32.

The mobile payment application 56 enables the user to manage the contactless payment card 6 and to view the balance on the user's account via a "Manage" button 34 and a "View Balance" button 36, respectively. If the user selects the "Manage" button 34, three further options appear on the screen for the user to select: "Change my PIN" 38, "Update my PIN" 40, "Unblock my PIN" 42.

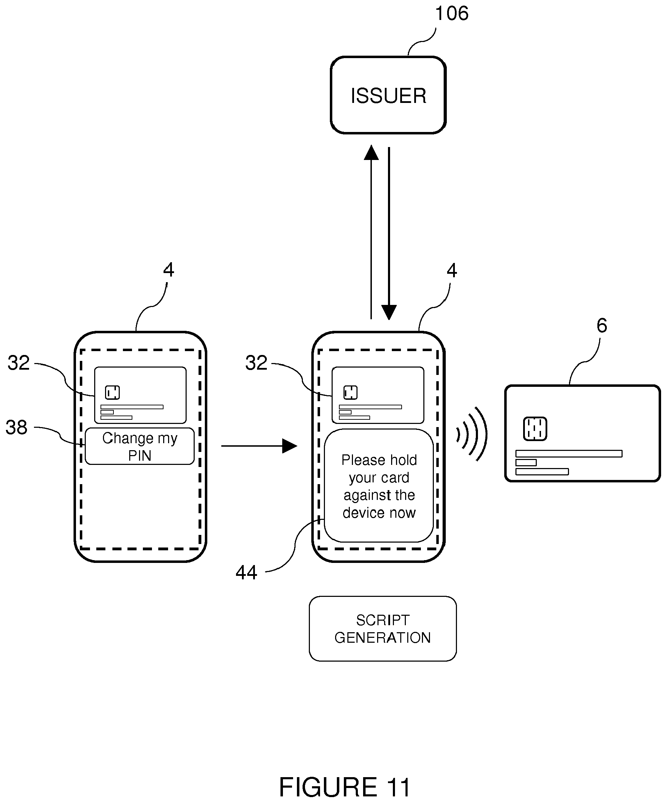

Referring to Figure 11, the user then requests a change by selecting "Change my PIN" 38. The user may be required to take additional steps at this stage; for example, the user may be prompted to type in and confirm the existing PIN. The user is presented with a prompt message 44 to request that the contactless payment card 6 is held against the mobile device 4 for script generation.

The user then presents the contactless payment card 6 to the mobile device 4 for a first time, during which the mobile device 4 acts as a terminal.

By way of background, in order to perform a contactless EMV transaction, the payment card is tapped against a terminal by the cardholder when prompted to do so. Typically, the terminal is connected to the acquirer network and when the payment card is tapped against the terminal, an AC calculated using details of the transaction is generated and sent for approval to the acquirer network. Once the transaction is approved, the goods or services are released. Full EMV contactless specifications may be found at https://www.emvco.com/emv-technologies/contactless/.

In the present method of applying changes to user credentials on a contactless payment card, an AC is generated by the card and sent to the issuer 106 for approval (without the need for an acquirer network). When the contactless payment card 6 is presented to the mobile device 4, the mobile device 4 issues a command to the contactless payment card 6 requesting the generation of an AC. The contactless payment card 6 subsequently generates an AC. The AC is transmitted from the contactless payment card 6 to the issuer 106 via a secure channel established between the mobile device 4 and the issuer 106, whereby the issuer 106 verifies the authenticity of the AC.

This approach thus has the form of a contactless EMV transaction, as discussed in EMVCo contactless specifications (found at https://www.emvco.com/emv-technologies/contactless/). A contactless EMV transaction might typically comprise the following steps:
Application Selection (potentially from a list of available applications);
GET PROCESSING OPTIONS;
A number of READ RECORD commands;
GENERATE AC, in which the card provides a cryptographic response to the terminal which allows both the terminal to verify the authenticity of the card (Offline

Data Authentication or ODA) and an Application Cryptogram which the issuer can verify online.

The issuer 106 then generates a script comprising details of the requested change. Again, EMV scripting is discussed and defined in EMV specifications, specifically in section 10.10 of EMV Book 3. The issuer 106 may use its hardware security module (HSM), or other suitable cryptographic device or process, to prepare the script. The script is then transmitted from the issuer 106 to the mobile device 4 via a secure channel.

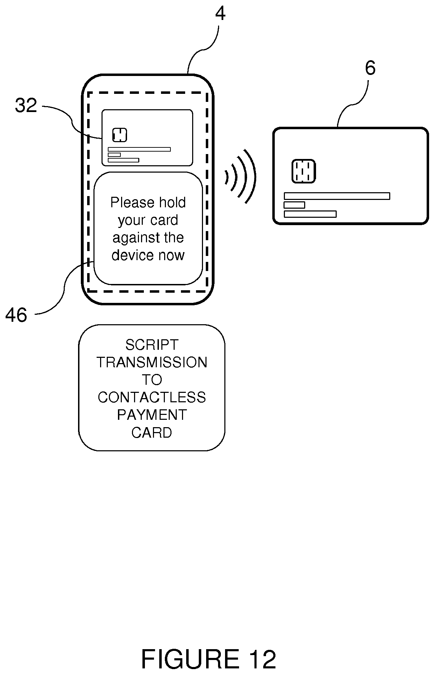

Referring to Figure 12, the user is then presented with a second prompt message 46 to request that the contactless payment card 6 is held against the mobile device 4 for script transmission to the contactless payment card 6. In response to the prompt, the user presents the contactless payment card 6 to the mobile device 4 for the second time. The mobile device transmits the script, which comprises information to confirm its authenticity, to the contactless payment card 6 using NFC capability. The script is in encrypted form and is sent via the secure channel. Lastly, the mobile device applies the requested change to the contactless payment card 6.

Many modifications may be made to the specific embodiments described above without departing from the scope of the invention as defined in the accompanying claims. Features of one embodiment may also be used in other embodiments, either as an addition to such embodiment or as a replacement thereof.

For example, the issuer may additionally enable an offline PIN change function to be supported, which would allow the offline PIN to be changed by providing an old PIN and a new PIN. In order to prevent guessing attacks, a limit may be put into placed on the number of attempts made via the offline PIN change function. Alternatively, the contactless payment card may implement cryptographic protection on the offline PIN change command. For example, by using a secret key personalised into a second application which can be securely derived and used by the mobile payment application that is installed on the mobile device. In addition, the second application may be equipped with robust error handling capabilities to ensure that the change was successfully carried out on the contactless payment card and synchronised with the issuer. As such, this ensures that the offline PIN of the card and the online PIN of the card have the same value.

## Claims

1. A computer-implemented method for management of a transaction device (8) with a contactless interface using a mobile device (4), the method comprising:
accessing (112) a mobile service application (704) installed on the mobile device (4);
authenticating (114) a user at the mobile device (4);
establishing (116) a management operation associated with the transaction device (8);
the mobile device (4) requesting a response from the transaction device (8) associated with the management operation via the contactless interface;
the transaction device (8) generating the response and providing it to the mobile device (4); and
the mobile service application (704) using the response to effect the management operation.

2. The method of claim 1, wherein the authenticating step complies with strong customer authentication requirements.

3. The method of claim 1 or claim 2, wherein generating the response comprises generating a cryptogram.

4. The method of any preceding claim, wherein the management operation is originated by a service provider remote from the mobile device and requires a response to the service provider to indicate that an authenticated user has possession of the mobile device (4) and the transaction device (8).

5. The method of any of claims 1 to 3, wherein the management operation is initiated by an authenticated user using the mobile service application to obtain permission from a service provider to update data in the transaction device.

6. The method of claim 5, wherein the data in the transaction device comprises one or more of the following: PIN change; PIN reset; name change; address change, counter reset, risk management parameter change, load ticket, delete ticket, update ticket.

7. The method of claim 4 or claim 5, wherein the management operation comprises resetting counters or accumulators associated with the transaction device (8).

8. The method of claim 7 where dependent on claim 4, wherein resetting of counters or accumulators is external to the mobile device (4) and transaction device (8).

9. The method of claim 7, wherein resetting of counters or accumulators is carried out at the transaction device.

10. The method of any of claims 5 to 7 or claim 9, further comprising the service provider providing the mobile device (4) with a script to be performed by the transaction device (8) for resetting or updating at the transaction device (8).

11. The method of claim 10, further comprising the mobile device (4) determining that the transaction device (8) is the transaction device (8) that provided the response, and if so, sending the script to the transaction device, whereupon the transaction device executes the script.

12. A mobile device having a processor, a memory, and communication capability including a contactless interface, wherein the mobile device is adapted to carry out steps performed by the mobile device in any of claims 1 to 11.

13. A transaction device having a processor, a memory and a capability for contactless communication with a contactless interface, wherein the transaction device is adapted to carry out steps performed by the transaction device in any of claims 1 to 11.

14. The transaction device of claim 13, wherein the transaction device is a passive device.

15. The transaction device of claim 13 or claim 14, wherein the transaction device is one of a smart card or a wearable device.
